# EUROPÄISCHE PATENTSCHRIFT

(11) **EP 1 371 293 B1**
(45) Veröffentlichungstag und Bekanntmachung des Hinweises auf die Patenterteilung: **11.04.2007**
(21) Anmeldenummer: 02012445.9
(22) Anmeldetag: 10.06.2002
(51) Int. Cl.: A22C 11/02, A22C 13/00, A22C 7/00

(54) **Vorrichtung und Verfahren zur Herstellung eines Stranges aus einer pastösen Masse und Extrudierkopf für eine derartige Vorrichtung bzw. Verfahren**
Device and method for producing a strand of plastic material and an extrusion head for the device/method
Appareil et procédé pour la fabrication d'un brin de materiau plastique et tête d'extrusion pour un tel appareil et une telle procédé

(43) Veröffentlichungstag der Anmeldung: 17.12.2003
(73) Patentinhaber: Albert Handtmann Maschinenfabrik GmbH & Co. KG, 88400 Biberach (DE)
(72) Erfinder: Reutter, Siegfried, 88436 Eberhardzell (DE); Schliesser, Gerhard, 88489 Wain (DE)
(74) Vertreter: Grünecker, Kinkeldey, Stockmair & Schwanhäusser Anwaltssozietät

(56) Entgegenhaltungen:
- NL-A- 9 201 169
- US-A- 3 767 821
- US-A- 5 759 602
- US-B1- 6 283 846

## Beschreibung

Die Erfindung betrifft eine Vorrichtung und ein Verfahren zur Herstellung eines Stranges aus einer pastösen Masse, insbesondere Wurstbrät, mit einem Extrudierkopf, der Mittel zum Koextrudieren der pastösen Masse und einer die Masse umgebenden Hülle umfasst, einer Verfestigungseinrichtung zum Verfestigen der Hülle und einer Abdreheinrichtung.

Eine Vorrichtung dieser Art ist aus der WO 93/12660 bekannt.

Ein Extrudierkopf ist aus der WO 99/22600 bekannt.

Die aus der WO 93/12660 bekannte Vorrichtung eignet sich insbesondere zur Herstellung von Endlos-Wurststrängen. Dazu ist ein Extrudierkopf vorgesehen, der aus einem Vorratsbehälter mit pastöser Masse, insbesondere mit Wurstbrät, versorgt wird. Der Extrudierkopf dieser bekannten Vorrichtung koextrudiert die pastöse Masse mit einer die Masse umgebenden Hülle in Strangform. Die Hülle besteht üblicherweise aus Collagen, d. h. aus einem Protein, das ein wässriges Gel mit einem hohen Wassergehalt bildet.

Nach Austritt des Produktstranges aus dem Extrudierkopf muss die Collagenhaut durch Koagulieren verfestigt werden. Dazu wird die Collagenhaut für einen längeren Zeitraum einem Koagulationsmittel, beispielsweise einer hochkonzentrierten Salzlösung, ausgesetzt.

In der aus der WO 93/12660 bekannten Vorrichtung wird die Salzlösung in einer Verfestigungseinrichtung mit der Collagenhaut in Kontakt gebracht. Diese Verfestigungseinrichtung schließt sich unmittelbar an den Extrudierkopf an und besteht aus einer Rinne, die sich spiralförmig ausgehend vom Extrudierkopf nach unten windet. Durch die Spiralform der Verfestigungsrinne soll ausreichend lange Verweildauer des Produktstranges in der Rinne gewährleistet werden.

Im Anschluss an diese spiralförmige Rinne, die eine Länge von 10 bis 15 m aufweisen kann, ist herkömmliche Abdreheinheit angeordnet, in welcher der Produktstrang portionsweise abgedreht wird. Der portionsweise abgedrehte Wurststrang wird daraufhin der Abdreheinheit entnommen, aufgehängt und in herkömmliche Weise geräuchert oder anderweitig weiten/erarbeitet.

Aufgrund der spiralförmigen Ausbildung der Verfestigungsrinne sowie aufgrund deren beträchtlicher Länge weist die Produktionslinie große Ausmaße auf und benötigt dementsprechend übermäßig viel Platz. Außerdem ist aufgrund der relativ langen Verweildauer des Produktstranges in der Verfestigungsrinne die Ausstoßrate der bekannten Vorrichtung relativ niedrig.

Abhilfe für die vorgenannten Nachteile wird teilweise durch die in der EP 0 932 340 B1 beschriebenen Vorrichtung erzielt.

In dieser Vorrichtung umfasst die Verfestigungseinrichtung an Stelle einer Verfestigungsrinne einen Bandförderer, auf dem der endlose Produktstrang aufliegt und entlang der Förderstrecke aus Düsen mit einer Solelösung besprüht wird. Im Anschluss an die Förderstrecke kann eine separate Abdreheinheit vorgesehen sein, die den Wurststrang mit ausreichend ausgehärteter Haut übernimmt und abdreht.

Durch den Einsatz dieses Förderers lässt sich zwar die Ausstoßrate dieser Vorrichtung erhöhen. Allerdings verläuft der Bandförderer dieser Verfestigungseinrichtung, wie in der WO 93/12660 vorgeschlagen, entlang einer spiralförmigen Strecke, bzw. in Serpentinen. Die aus der EP 0 932 340 B1 bekannte Vorrichtung ist deshalb ebenfalls sehr platzaufwendig.

Eine ähnliche Vorrichtung, bei der der Produktstrang auf einem serpentinenförmigen Förderer mit einem flexiblen Förderband unterhalb von Sprühdüsen bewegt wird, ist aus der US 6,024,637 bekannt. Eine weitere Vorrichtung zur Herstellung eines Stranges aus einer pastösen Masse mit einer serpentinenförmigen Verfestigungseinrichtung ist aus der EP 0 755 189 B 1 bekannt.

Insgesamt erfolgt bei allen vorstehend beschriebenen herkömmlichen Vorrichtungen das Abdrehen des Wurststranges mittels einer separaten Abdreheinheit, die der spiralförmigen Verfestigungsstrecke nachgeordnet ist. Die Aufstellung derartiger Vorrichtungen ist deshalb sehr platzraubend.

Ausgehend von diesem Stand der Technik ist es eine Aufgabe der Erfindung, eine Vorrichtung und ein Verfahren zur Herstellung eines koextrudierten Stranges aus einer pastösen Masse vorzuschlagen, die eine hohe Ausstoßrate bei gleichzeitig kompakter Bauweise unter Schaffung der Voraussetzungen für den Abdrehvorgang gestatten.

Diese Aufgabe wird hinsichtlich der Vorrichtung durch den Gegenstand des Anspruchs 1 und hinsichtlich des Verfahrens durch den Gegenstand des Anspruchs 16 erfindungsgemäß gelöst.
Durch die relative Drehbarkeit zwischen den Koextrusionsmittels und der Strangführung der Abdreheinheit einerseits sowie der Fördereinrichtung andererseits wird die Voraussetzung für das Abdrehen eines zwischen der Abdreheinrichtung und der Fördereinrichtung befindlichen Strangabschnittes geschaffen.

Das bedeutet, dass die Fördereinrichtung erfindungsgemäß nicht nur dem Transport des Produktstranges dient, sondern auch im Zusammenwirken mit der Strangführung der Abdreheinrichtung das Verdrehen des Produktstranges bewirkt. Demgegenüber ist in den bekannten Vorrichtungen die Fördereinrichtung Teil der Verfestigungseinrichtung
und dient nur dem Führen des ausgestoßenen Wurststranges durch das Solebad oder die Soledusche.

Des Weiteren hat die Fördereinrichtung der bekannten Vorrichtungen die Funktion, die Aushärte- bzw. Trocknungsstrecke zu verlängern, durch die spiralförmige Streckenführung erfolgt. Eine Kopplung der Abdreheinheit und einer im Stand der Technik nicht beschriebenen, nachgeordneten Fördereinrichtung mit dem Extruderkopf wird durch die spiralförmige Streckenführung der Verfestigungseinrichtung verhindert.

Erfindungsgemäß wird der Abdrehvorgang auf die der Abdreheinrichtung nachgeschaltete Fördereinrichtung sowie auf die Strangführung der Abdreheinrichtung und die Koextrusionsmittel des Extrudierkopfes verteilt. Durch diese Funktionsverteilung kann vorteilhafterweise auf eine separate Abdrehvorrichtung verzichtet werden, in der der gesamte Abdrehvorgang stattfindet. Vielmehr kann erfindungsgemäß mit einfachen Mitteln das Abdrehen des Produktstranges bewerkstelligt werden, was einen kompakten Aufbau der Produktionslinie erlaubt.

Die Erfindung zeichnet sich ferner dadurch aus, dass die der Abdreheinrichtung nachgeordnete Fördereinrichtung neben dem Transport ein Abziehen des aus dem Extrudierkopf ausgestoßenen Stranges synchron zur Ausstoßgeschwindigkeit bewirkt. Dadurch wird vorteilhafterweise ein Produktstau am Extrudierkopf vermieden und die Ausstoßgeschwindigkeit kann erhöht werden.

Gemäß der Erfindung sind zur Erzeugung der relativen Drehbewegung das Koextrusionsmittel und die Strangführung drehbar, wobei die Fördereinrichtung angepasst ist, den Strang drehfest zu fördern. Die Fördereinrichtung zieht somit den Strang ab und hält ihn gleichzeitig gegen Verdrehen fest. Durch die Drehbewegung der Strangführung kann der Strang rotierend mitgenommen werden, so dass dieser gegenüber dem in der Fördereinrichtung drehfest gehaltenen Strangabschnitt verdreht wird. Durch die drehbare Ausführung des Koextrusionsmittels wird der unmittelbar aus dem Extrudierkopf ausgestoßene Strangabschnitt der Drehbewegung der Strangführung nachgeführt. Dadurch wird ein Verdrehen des zwischen dem Koextrusionsmittel und der Strangführung befindlichen Strangabschnittes verhindert.

Durch diesen mit einfachen Mittel realisierbaren Aufbau kann auf die Verwendung einer separaten Abdreheinheit verzichtet und die Kompaktheit der Anlage verbessert werden. Es ist auch möglich, dass die Strangführung und die Koextrusionsmittel stationär sind und die Fördereinrichtung den Wurststrang dreht.

In einer weiteren bevorzugten Ausführungsform umfasst das Koextrusionsmittel ein Füllrohr und Füllrohr das Füllrohr und die Extrudierdüse um Längsachse des Füllrohres drehbar sind. Durch die Drehung des Füllrohres und der Extrudierdüse um dieselbe Längsachse können die pastöse Masse und die diese Masse umgebende Hülle im Wesentlichen spannungsfrei koextrudiert werden.

Die Extrudierdüse weist in einer bevorzugten Ausgestaltung einen Ringspalt auf, der zwischen dem Füllrohr und einer Wandung der Extrudierdüse am freien Ende des Füllrohres ausgebildet ist. Durch diesen Ringspalt wird das Hüllenmaterial zur Bildung der Wursthaut in Form eines dünnen Filmes auf die aus dem Füllrohr ausgestoßene pastöse Masse aufgebracht.

In bevorzugter Weise erstreckt sich der Ringspalt im Wesentlichen radial zur Längsachse des Füllrohres, wobei die Wandung mit dem freien Ende des Füllrohres im Wesentlichen abschließt. Ein Extrudierkopf mit einer derartigen Extrudierdüse lässt sich auf einfache und billige Weise herstellen.

In einer weiteren bevorzugten Ausführungsform erstreckt sich der Ringspalt im Wesentlichen parallel zur Längsachse des Füllrohres, wobei die Wandung das freie Ende des Füllrohres übergreift. Ferner kann die Wandung axial verschieblich im Extrudierkopf gelagert sein. Dies bietet den Vorteil, dass der Ringspalt einstellbar ist, d.h., dass der Abstand zwischen der Wandung und dem Füllrohrende variabel verändert werden kann.

Die Wandung kann einen das Füllrohr umgebenden Düsenhohlraum begrenzen, der mit einer Massezufuhr verbunden ist. Über die Massezufuhr wird das Hüllenmaterial in den Düsenhohlraum der Extrudierdüse eingebracht und von dort durch den Ringspalt auf den aus dem Füllrohr austretenden Wurststrang gespritzt. Durch den Düsenhohlraum können vorteilhafterweise Druckschwankungen bei der Zufuhr des Hüllenmaterials kompensiert werden, wodurch die Gleichmäßigkeit des aufgebrachten Filmes verbessert wird.

Bevorzugterweise ist die Extrudierdüse fest mit dem Füllrohr verbunden und drehbar gelagert. Dies gestattet eine sehr kompakte Bauweise des Extrudierkopfes. Gleichzeitig wird dadurch eine synchrone Drehbewegung der Extrudierdüse und des Füllrohres erreicht.

Die Strangführung der Abdreheinrichtung kann eine in einem Gehäuse drehbar gelagerte Hülse umfassen, die mit einem Zahnrad verbunden ist. Durch diese Hülse wird der Wurststrang geführt und bei einer Drehbewegung der Strangführung rotierend mitgenommen. Die Drehbewegung kann durch das Zahnrad, das mit einem Antrieb koppelbar ist, erzeugt werden.

In bevorzugter Weise sind die Abdreheinrichtung und das Koextrusionsmittel synchron angetrieben, so dass durch die synchrone Drehbewegung Spannungen im Strangabschnitt zwischen der Abdreheinheit und dem Koextrusionsmittel vermieden werden.

Die Fördereinrichtung kann wenigstens zwei parallele, im Kaliber einstellbare Transportbänder aufweisen, die einen dazwischen befindlichen Strangabschnitt drehfest fördern. Durch die Einstellbarkeit der parallelen Transportbänder kann vorteilhafterweise die Vorrichtung an Wurststränge mit unterschiedlichen Kalibern angepasst werden. Des Weiteren wird bei dieser Ausgestaltung auf einfache Weise die Förderfunktion sowie die Haltefunktion der Fördereinrichtung verwirklicht.

Der Extrudierkopf, die Verfestigungseinrichtung, die Abdreheinrichtung und die Fördereinrichtung können fluchtend angeordnet sein, was zu einer besonders kompakten Bauform führt.

Die Verfestigungseinrichtung kann eine Ringdusche oder eine Wanne für eine Solelösung umfassen, die unmittelbar nach dem Extrudierkopf angeordnet sind. Diese Verfestigungseinrichtung muss nicht, wie im Stand der Technik, spiralförmig ausgebildet sein, um eine ausreichend lange Verweildauer für den Wurststrang zu gewährleisten.

Diese bisher erforderliche lange Verweildauer zur Erzielung einer ausreichenden Festigkeit der Wursthülle war bisher aufgrund der verwendeten Collagenmaterialien erforderlich. Mittlerweile sind allerdings auf dem Markt Materialien zum Herstellen eines Wursthüllenfilmes erhältlich, die nur eine sehr kurze Aushärtezeit von ca. 1 Sekunde benötigen. Dazu gehört beispielsweise ein Material der Bezeichnung Rudin CoEx Vegacasing. Des Weiteren können pflanzliche Materialien, beispielsweise aus Algen hergestellt, wie in der WO 02/15715 verarbeitet werden.

Aufgrund der extrem kurzen Aushärtedauer dieser Hüllenmaterialien ist es nicht notwendig, die Verfestigungseinrichtung aufwendig in Spiralform auszubilden. Vielmehr genügt eine geradlinige Ringdusche oder eine Wanne, um die Wursthaut während einer relativ kurzen Dauer mit der Solelösung in Kontakt zu bringen.

In einer weiteren bevorzugten Ausgestaltung ist zwischen der Abdreheinrichtung und der Fördereinrichtung eine Verdrängereinheit vorgesehen. Diese Verdrängereinheit verdrängt an vorgesehenen Stellen des Produktstranges die pastöse Masse, so dass an diesen Stellen ein leichtes Abdrehen des Wurststranges stattfinden kann.

Vorteilhafterweise umfasst die Verdrängereinheit zwei gegenläufig und synchron arbeitende Verdränger, die in geschlossenem Zustand einen Spalt ausbilden. Wenn der Wurststrang die Verdrängereinheit durchläuft, schließen die Verdränger und bilden einen Spalt, aus dem die pastöse Masse herausgedrängt wird. Zwischen dem Spalt verbleibt dann im Wesentlichen nur noch die Wursthaut.

Die Erfindung wird nachfolgend anhand von Ausführungsbeispielen unter Bezug auf die beiliegenden schematischen Zeichnungen näher erläutert. In diesen zeigt:
- Fig. 1: eine Seitenansicht eines Ausführungsbeispiels der Erfindung;
- Fig. 2a: einen Querschnitt des Extrudierkopfes der Vorrichtung aus Fig. 1;
- Fig. 2b: einen Querschnitt mit modifizierter Ringspaltanordnung,
- Fig. 3: eine Seitenansicht eines Ausschnittes der Vorrichtung aus Fig. 1 umfassend eine Ringdusche und den Extrudierkopf;
- Fig. 4: eine Seitenansicht eines weiteren Ausführungsbeispiels der Erfindung, umfassend eine Wanne für eine Solelösung und den Extrudierkopf;
- Fig. 5: einen Querschnitt einer Abdreheinrichtung;
- Fig. 6: einen Querschnitt der Strangführung der Abdreheinrichtung aus Fig. 5 und
- Figuren 7A-7C: Seitenansichten der Verdrängereinheit in verschiedenen Stellungen.

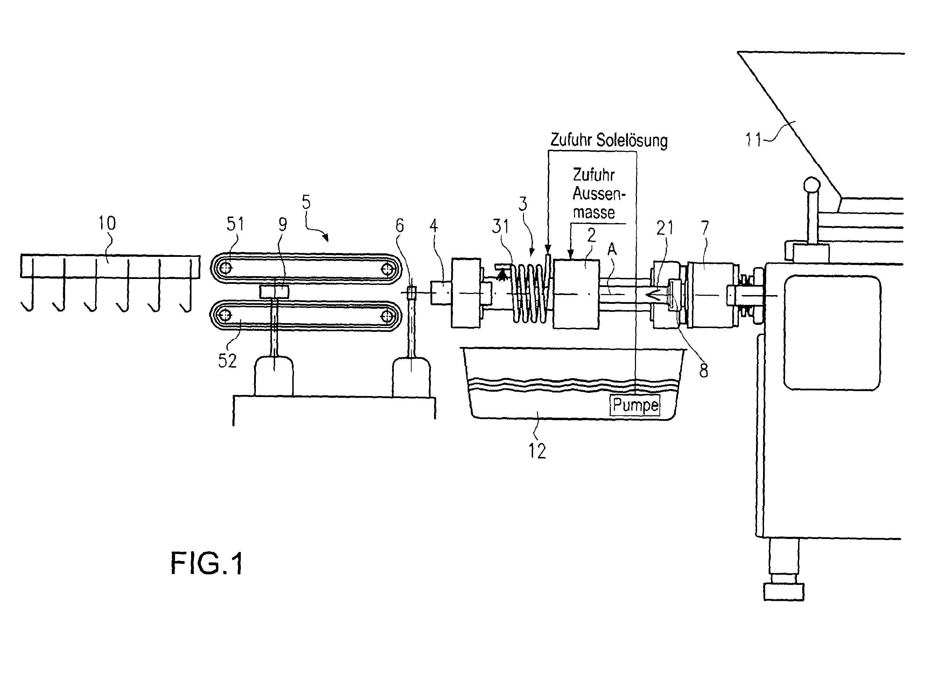

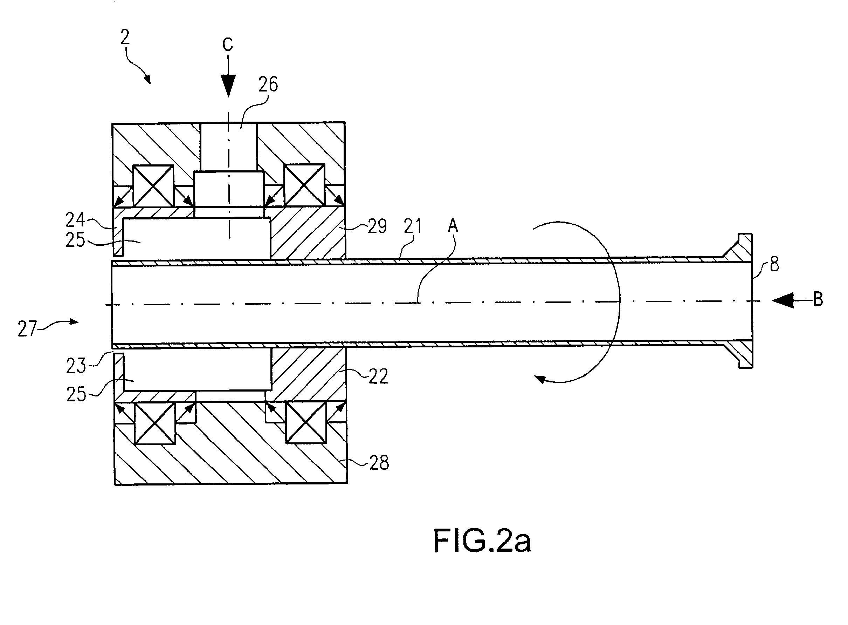

Wie in Fig. 1 gezeigt ist, weist die Vorrichtung einen Vorratsbehälter 11 auf, über welchen eine pastöse Masse, wie beispielsweise Wurstbrät dem Füllrohr 21 zugeführt werden kann. Das Wurstbrät wird durch eine Öffnung 8, die auch in Fig. 2a im Querschnitt gezeigt ist, in das Füllrohr 21 unter Druck eingeführt und dem Extrudierkopf 2 zugeführt. Der Extrudierkopf 2 ist mit einer Zufuhr 26 für eine Außenmasse, d. h. für das Hüllenmaterial, verbunden.

Zum Koextrudieren werden dem Extrudierkopf 2 gleichzeitig Wurstbrät durch das Füllrohr 21 als Innenmasse in Pfeilrichtung B und Hüllenmaterial durch die Zufuhr 26 als Außenmasse in Pfeilrichtung C zugeführt. Dies ist insbesondere in Fig, 2 gezeigt.

Wie weiter in Fig. 1 zu erkennen, wird der aus dem Extrudierkopf 2 austretende koextrudierte Wurststrang durch eine im Anschluss an den Extrudierkopf 2 vorgesehene Ringdusche 31, die Teil der Verfestigungseinrichtung 3 bildet, hindurchgeführt. Die Ringdusche 31 ist mit einer Zufuhr für eine Solelösung verbunden, die mittels einer Pumpe aus einem weiteren Vorratsbehälter 12 der Ringdusche 31 zugeführt wird. Nach Austritt des Wurststranges aus der Verfestigungseinrichtung 3 ist die Wursthaut ausgehärtet und weist eine ausreichende Stabilität auf, um beim portionsweisen Abdrehen des Wurststranges nicht zu zerreißen.

In Förderrichtung nach der Verfestigungseinrichtung 3 sind abfolgend die Abdreheinrichtung 4, die Verdrängereinheit 6 und die Fördereinrichtung 5 angeordnet.

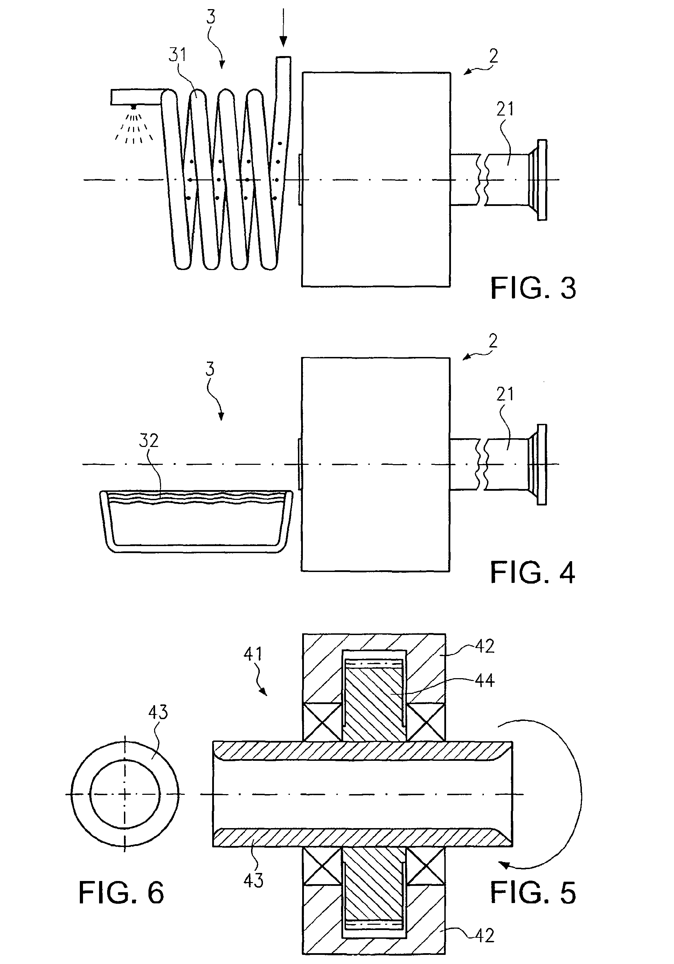

In dem in Fig. 1 gezeigten Ausführungsbeispiel sind die Strangführung 41 der Abdreheinheit 4 und die Koextrusionsmittel 27, die das Füllrohr 21 und Extrudierdüse 22 umfassen, drehbar angeordnet. Im Detail sind die Strangführung 41 in Fig. 5 und die Koextrusionsmittel 27 in Fig. 2a dargestellt und werden an späterer Stelle näher beschrieben.

Der Antrieb der Koextrusionsmittels 27 und des Füllrohres 21 erfolgt über eine Antriebseinheit 7, die in Förderrichtung vor der Zufuhröffnung 8 des Füllrohres 21 angeordnet ist.

Wie ferner in Fig. 1 zu erkennen, ist die Fördereinrichtung 5 als zwei parallele Transportbänder 51, 52 ausgeführt. Der Abstand zwischen diesen beiden Transportbändern 51, 52 ist veränderbar, um die Fördereinrichtung 5 an Wurststränge mit unterschiedlichem Kaliber anpassen zu können.

Im Betrieb wird ein Wurststrang nach dem Austritt aus der Verfestigungseinrichtung 3 durch die Abdreheinrichtung 4 und zwischen die Transportbänder 51 und 52 geführt. Die Transportbänder 51, 52 ziehen den aus der Extrudierdüse 22 ausgestoßenen Wurststrang synchron zur Ausstoßgeschwindigkeit ab und transportieren gleichzeitig das fertige Produkt zur Aufhängeeinrichtung 10.

Die beiden Transportbänder 51, 52 haben des Weiteren die Funktion, den zwischen diesen Transportbändern 51, 52 befindlichen Strangabschnitt während des Abziehens gegen Verdrehen zu halten. Dies erfolgt durch Einstellen eines vorbestimmten Abstandes zwischen den Transportbändern 51, 52 derart, dass die Transportbänder 51, 52 auf den dazwischen befindlichen Strangabschnitt einen bestimmten Druck ausüben, der hoch genug ist, den Strangabschnitt gegen Verdrehen zu sichern, ohne ihn jedoch zu zerstören.

Zum Abdrehen des Wurststranges wird über die Abdreheinrichtung 4 ein Drehmoment auf den zwischen der Fördereinrichtung 5 und der Abdreheinrichtung 4 befindlichen Strangabschnitt aufgebracht. Dazu wird die in Fig. 5 gezeigte Strangführung 41 um eine gewünschte Anzahl von Umdrehungen gedreht, wobei der in der Strangführung 41 befindliche Strangabschnitt mitgedreht wird. Da der in der Fördereinrichtung 5 befindliche Strangabschnitt gegen Verdrehen gehalten wird, wird durch Drehen der Strangführung 41 der Abdreheinheit 4 der zwischen Abdreheinheit 4 und Fördereinrichtung 5 befindliche Strangabschnitt verdreht. Dadurch wird ein portionsweises Abdrehen des Wurststranges ermöglicht.

Um zu verhindern, dass der zwischen der Abdreheinrichtung 4 und dem Extrudierkopf 2 befindliche Strangabschnitt beim Abdrehen verdreht wird, sind die Koextrusionsmittel 27, also das Füllrohr 21 und die dem Füllrohr 21 zugeordnete Extrudierdüse 22 drehbar gelagert.

Auf diese Weise kann der gesamte Strangabschnitt ausgehend von der Extrudierdüse 22 bis zur Fördereinrichtung 5 gedreht werden, wobei die Einleitung des Drehmomentes in der Abdreheinrichtung 4 erfolgt. Das bedeutet, dass der Strangabschnitt zwischen Extrudierdüse 22 und Abdreheinheit 4 im Wesentlichen torsionsfrei bleibt, während der Strangabschnitt zwischen Abdreheinrichtung 4 und Fördereinrichtung 5 verdreht wird. Zur Erzielung eines vollständigen torsionsfreien Zustandes des Wurststranges zwischen Abdreheinheit 4 und Extrudierkopf 2 sind die Abdreheinrichtung 4 und der Extrudierkopf 2 synchron mit der Antriebseinrichtung 7 gekoppelt.

Die vorstehend beschriebene relative Drehbewegung zwischen Fördereinrichtung und Abdreheinrichtung kann alternativ dadurch erzielt werden, dass die Abdreheinrichtung und der Extrudierkopf stationär sind, d. h. keine Drehbewegung des Wurststranges erlauben. Die zum Abdrehen erforderliche Drehbewegung wird dann über eine entsprechend angepasste Fördereinrichtung in den Wurststrang eingeleitet. Diese angepasste Fördereinrichtung erlaubt das gleichzeitige axiale Fördern des Wurststranges und das Drehen des Wurststranges um eine Achse in Förderrichtung.

Nachfolgend werden die einzelnen Baugruppen der in Fig. 1 gezeigten Vorrichtung näher beschrieben.

Der in Fig. 2a gezeigte Extrudierkopf 2 umfasst das Füllrohr 21 und die Extrudierdüse 22. Das Füllrohr 21 und die Extrudierdüse 22 sind um die Längsachse A des Füllrohres 21 rotierbar, wie durch den Drehpfeil angedeutet. Die Extrudierdüse 22 ist mit dem Füllrohr 21 fest verbunden, beispielsweise durch einen Presssitz. Andere Verbindungsarten sind selbstverständlich auch möglich. Die Extrudierdüse 22 ist in einem Gehäuse 28 drehbar gelagert und gegen die Umgebung abgedichtet, um zu verhindern, dass Verunreinigungen in den Wurststrang gelangen.

Die Extrudierdüse 22 weist einen Ringspalt 23 auf, der konzentrisch das Füllrohr 21 umgibt. Dieser Ringspalt 23 ist zwischen einer Wandung 24 der Extrudierdüse 22 am freien Ende des Füllrohres 21 sowie dem Füllrohr 21 ausgebildet.

Dabei erstreckt sich der Ringspalt 23 im Wesentlichen radial zur Längsachse A des Füllrohres 21, wobei, wie in Fig. 2a zu erkennen, die Wandung 24 mit dem freien Ende des Füllrohres 21 im Wesentlichen abschließt.

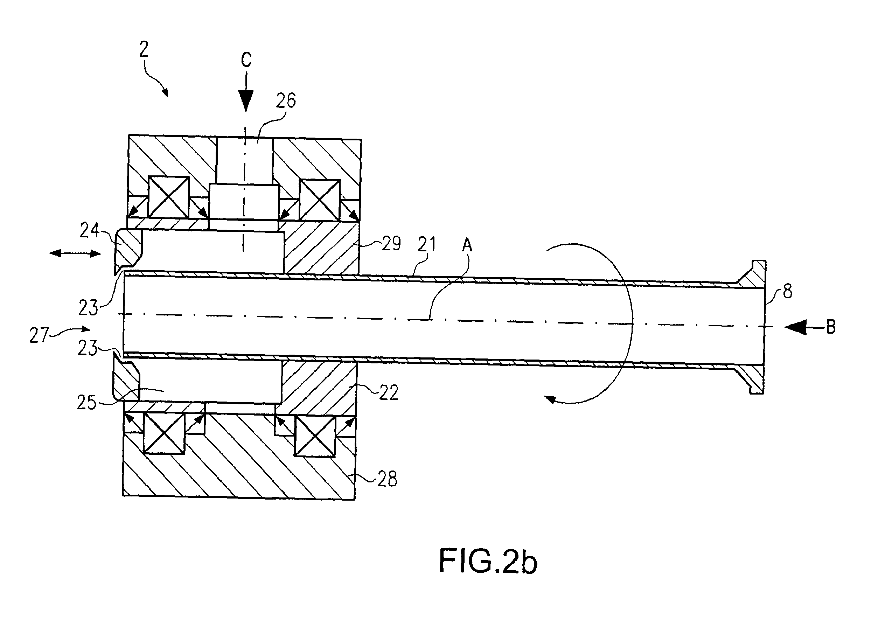

Alternativ ist es auch möglich, wie in Fig. 2b gezeigt, die Wandung 24 als Ringscheibe auszubilden, die an ihrem Innenumfang das freie Ende des Füllrohres 21 übergreift. Der dadurch zwischen dem übergreifenden Bereich der Wandung 24 und dem freien Ende des Füllrohres 21 gebildete Ringspalt 23 erstreckt sich, wie in Fig. 2b gezeigt, parallel zur Längsachse A des Füllrohres.

Die ringförmige Scheibe, d.h. die Wandung 24, ist in axialer Richtung gleitverschieblich in den Extrudierkopf 2 eingesetzt. Durch axiales Verschieben der Ringscheibe in Richtung des Doppelpfeils in Fig. 2b kann der sich ebenfalls in axialer Richtung erstreckende Ringspalt, d.h. der Abstand zwischen dem übergreifenden Bereich der Ringscheibe und dem freien Ende des Füllrohres 21 verändert werden.

Die Wandung 24 begrenzt einen Düsenhohlraum 25, der mit der Zufuhr 26 für das Hüllenmaterial in Verbindung steht. Der Hohlraum 25 wird von einer weiteren Wandung 29 begrenzt, die eine größere Stärke als die Wandung 24 aufweist. Das Füllrohr 21 und die Extrudierdüse 22 sind im Bereich der stärkeren Wandung 29 miteinander verbunden. Die Wandung 29 ist derart dimensioniert, dass die Verbindung zwischen Extrudierdüse 22 und Füllrohr 21 eine ausreichende Festigkeit aufweist.

Im Betrieb wird in Pfeilrichtung C über die Zufuhr 26 pastöses Hüllenmaterial in den Düsenhohlraum 25 eingepresst und von dort durch den Ringspalt 23 aus der Extrudierdüse 22 ausgepresst. Gleichzeitig wird durch das Füllrohr 21 in Pfeilrichtung B pastöse Masse, wie beispielsweise Wurstbrät zum freien, in Fig. 2a linken Ende des Füllrohrs 21 gebracht. Zum Koextrudieren wird das Hüllenmaterial durch den Ringspalt 23 der Extrudierdüse 22 auf das am freien Ende des Füllrohres 21 austretende Wurstbrät aufgespritzt.

Die Dicke der aufgebrachten Wursthaut kann durch Verändern der Größe des Ringspaltes 23 eingestellt werden. Das Mengenverhältnis des Hüllenmaterials zum Wurstbrät kann über die Zufuhrgeschwindigkeiten der jeweils der Extrudierdüse 22 und dem Füllrohr 21 zugeordneten Förderpumpen geregelt werden.

Beim Abdrehen des Wurststranges zwischen der Abdreheinrichtung 4 und der Fördereinrichtung 5 werden das Füllrohr 21 und die damit fest verbundene Extrudierdüse 22 mittels des Antriebs 7 um die Achse A des Füllrohres 21 gedreht. Dies bedeutet, dass sowohl das Hüllenmaterial als auch das Wurstbrät beim Abdrehen synchron gedreht werden, so dass das Hüllenmaterial gleichmäßig auf das Wurstbrät aufgespritzt werden kann.

Die im Anschluss an den Extrudierkopf 2 vorgesehene Verfestigungseinrichtung 3 ist mit der Ringdusche 31 versehen, wie in Fig. 3 gezeigt. Die Ringdusche 31 ist mit einem Vorratsbehälter über eine Pumpe für die Zufuhr von Solelösung verbunden. Alternativ kann nach dem Extrudierkopf 2 auch ein Solebad in einer Wanne 32 angeordnet sein, durch das der extrudierte Produktstrang hindurchgeführt wird.

Aufgrund der sehr schnellen Aushärtezeiten der erhältlichen Hüllenmaterialien kann die Verfestigungsstrecke kurz gehalten werden, wie in Fig. 1 gezeigt.

Unmittelbar nach der Sole-Ringdusche 31 bzw. dem Solebad 32 ist die Abdreheinrichtung 4 angeordnet. Die Abdreheinrichtung 4 umfasst die Strangführung 41 mit einer Hülse 43, die in einem Gehäuse 42 drehbar gelagert ist. Die Hülse 43 ist an ihren Enden abgerundet, wobei sie an der in Förderrichtung vorderen Eintrittsöffnung flacher abgerundet ist, als an der hinteren Austrittsöffnung. Da der Innendurchmesser der Hülse 43 etwas kleiner als der Außendurchmesser des Wurststranges ist, um einen bestimmten Reib- bzw. Formschluss zu erzeugen, verhindert die eintrittsseitige Abflachung der Hülse 43 ein Verletzen des Wurststranges beim Eintritt in die Hülse 43.

Der Antrieb der Hülse erfolgt über ein Antriebsrad 44, beispielsweise ein Reibrad oder ein Zahnrad, das mit der Hülse 43 fest verbunden ist. Das Antriebsrad 44 kann mit dem Antrieb 7 gekoppelt sein.

Im Betrieb wird der Wurststrang durch die Hülse 43 geführt und beim Abdrehen durch die Drehbewegung der Hülse 43 rotierend mitgenommen. Durch das Zusammenwirken des drehbaren Füllrohres 21, der damit fest verbundenen Extrudierdüse 22 und der drehbaren Hülse 43 wird ein Verdrehen des in der Fördereinrichtung drehfest gehaltenen Wurststranges ermöglicht.

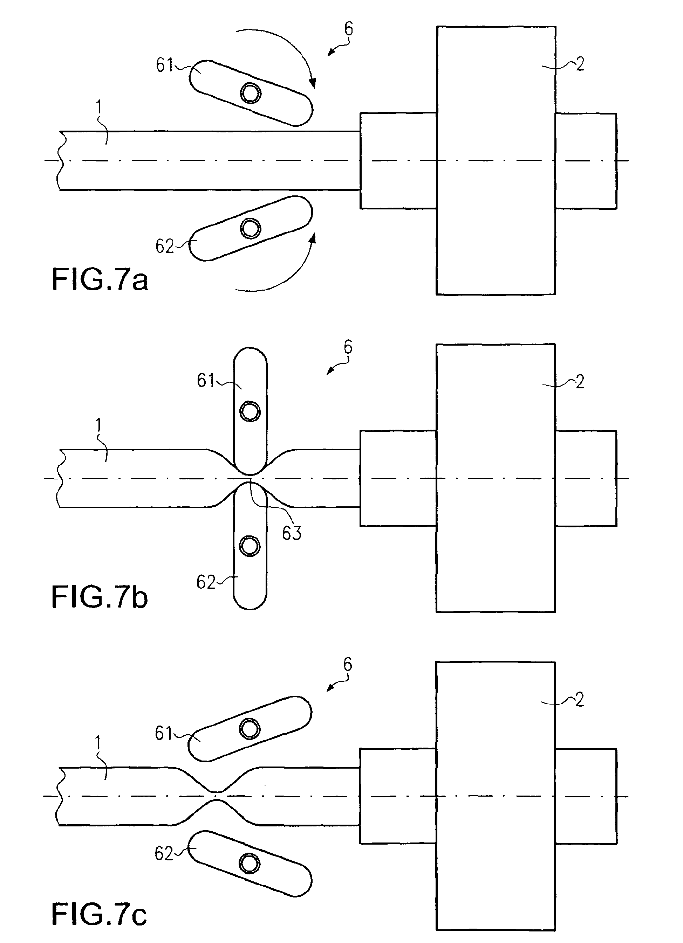

Die in Fig. 1 zwischen der Abdreheinrichtung 4 und der Fördereinrichtung 5 vorgesehene Verdrängereinheit 6 ist in den Fig. 7A, 7B und 7C genauer gezeigt.

Die Verdrängereinheit 6 dient dazu, die pastöse Innenmasse an den gewünschten Abteilstellen entlang der Längsachse des Produktstranges zu verdrängen. Dazu weist die Verdrängereinheit 6 zwei drehbar gelagerte Verdränger 61, 62 auf, die gegenläufig und synchron arbeiten. Beim Schließen bzw. Eingreifen der Verdränger 61, 62, wie in Fig. 7B gezeigt, wird die Innenmasse gegenüber der verfestigten Außenmasse, d. h. der Wursthaut, verdrängt. Dadurch entsteht eine Lücke im Produktstrang. Um ein Abscheren des Produktstranges, bzw. der verfestigten Hülle zu vermeiden, ist zwischen den geschlossenen Verdrängern 61, 62 ein Spalt 63 vorhanden, wie in Fig. 7B zu erkennen. Die Größe dieses Spaltes 63 steht in Abhängigkeit zur Dicke der Außenhaut.

Nach Unterteilung des Produktstranges durch die Bewegung der Verdränger 61, 62 kann sich der abgedrehte und dadurch auf Torsion vorgespannte Strang entspannen, indem eine Einschnürung, d. h. die gewünschte Abdrehstelle, in die verdrängte Lücke einspringt.

Die Länge der Portionen ist variabel und wird durch die Ansteuerung des nicht gezeigten Antriebs der Verdrängereinheit 6 bestimmt. Die Anzahl der Abdrehungen ist ebenfalls variabel und wird durch die Ansteuerung des Antriebs 7 der Abdrehvorrichtung 4 bestimmt.

Alternativ kann auf die Verdrängereinheit 6 verzichtet werden, so dass die Transportbänder 51, 52 unmittelbar nach der Abdreheinrichtung 4 angeordnet sind.

Die für das Abdrehen erforderliche Lücke im Inneren des Wurststranges kann bei diesem Ausführungsbeispiel durch Verlangsamen des Extrudierfüllstromes oder nur durch das Absenken der Fördermenge der Innenmasse bei gleichbleibender Fördermenge der Außenmasse und gleichzeitigem Beschleunigen der Transportbänder 51, 52 erreicht werden.

Wie bei der Variante mit Verdrängereinheit 6 wird im Betrieb durch die Drehung der Abdreheinrichtung 4 gegenüber den Transportbändern 51, 52 der Strang auf Torsion vorgespannt. In die dadurch entstehende Lücke springt die Abdrehstelle des vorgespannten Wurststranges ein und bildet eine Portion.

Die in Fig. 1 gezeigte Vorrichtung kann selbstverständlich mit Zusatzkomponenten wie einer Schneideeinrichtung 9 oder der Aufhängeeinrichtung 10 kombiniert werden.

Das Füllrohr 21 mit Extrudierdüse sowie die Hülse 43 sind Formatteile, die zur Erzeugung unterschiedlicher Wurstkaliber verwendet werden.

## Patentansprüche

1. Vorrichtung zur Herstellung eines Stranges (1) aus einer pastösen Masse, insbesondere Wurstbrät, mit einem Extrudierkopf (2), der Mittel (27) zum Koextrudieren der pastösen Masse und einer die Masse umgebenden Hülle umfasst, einer Verfestigungseinrichtung (3) zum Verfestigen der Hülle und einer Abdreheinrichtung (4), **gekennzeichnet durch**
eine Fördereinrichtung (5), die der Abdreheinrichtung (4) nachgeordnet ist, wobei entweder die Koextrusionsmittel (27) und eine Strangführung (41) der Abdreheinrichtung (4) drehbar sind
und die Fördereinrichtung (5) angepasst ist, den Strang (1) drehfest zu fördern, oder
die Strangführung (41) und die Koextrusionsmittel (27) stationär sind und die Fördereinrichtung (5) den Wurststrang dreht.

2. Vorrichtung nach Anspruch 1, **dadurch gekennzeichnet, dass** die Koextrusionsmittel (27) ein Füllrohr (21) und eine dem Füllrohr (21) zugeordnete Extrudierdüse (22) umfassen, wobei das Füllrohr (21) und die Extrudierdüse (22) um eine Längsachse (A) des Füllrohres (21) drehbar sind.

3. Vorrichtung nach Anspruch 2, **dadurch gekennzeichnet, dass** die Extrudierdüse (22) einen Ringspalt (23) aufweist, der zwischen dem Füllrohr (21) und einer Wandung (24) der Extrudierdüse (22) am freien Ende des Füllrohres (21) ausgebildet ist.

4. Vorrichtung nach Anspruch 3, **dadurch gekennzeichnet, dass** sich der Ringspalt (23) im Wesentlichen radial zur Längsachse (A) des Füllrohres (21) erstreckt, wobei die Wandung (24) mit dem freien Ende des Füllrohres (21) im Wesentlichen abschließt.

5. Vorrichtung nach Anspruch 3, **dadurch gekennzeichnet, dass** sich der Ringspalt (23) im Wesentlichen parallel zur Längsachse (A) des Füllrohres (21) erstreckt, wobei die Wandung (24) das freie Ende des Füllrohres (21) Obergreift.

6. Vorrichtung nach Anspruch 5, **dadurch gekennzeichnet, dass** zur Einstellung des Ringspaltes (23) die Wandung (24) axial verschieblich im Extrudierkopf (2) gelagert ist.

7. Vorrichtung nach wenigstens einem der Ansprüche 5 bis 6, **dadurch gekennzeichnet, dass** die Wandung (24) einen das Füllrohr (21) umgebenden Düsenhohlraum (25) begrenzt, der mit einer Massezufuhr (26) verbunden ist.

8. Vorrichtung nach wenigstens einem der Ansprüche 2 bis 7, **dadurch gekennzeichnet, dass** die Extrudierdüse (22) fest mit dem Füllrohr (21) verbunden und drehbar gelagert ist.

9. Vorrichtung nach Anspruch 1, **dadurch gekennzeichnet, dass** die Strangführung (41) eine in einem Gehäuse (42) drehbar gelagerte Hülse (43) umfasst, die mit einem Antriebsrad (44) verbunden ist.

10. Vorrichtung nach wenigstens einem der Ansprüche 1 bis 9, **dadurch gekennzeichnet, dass** die Abdreheinrichtung (4) und das Koextrusionsmittel (27) synchron angetrieben sind.

11. Vorrichtung nach wenigstens einem der Ansprüche 1 bis 10, **dadurch gekennzeichnet, dass** die Fördereinrichtung (5) wenigstens zwei parallele, im Kaliber einstellbare Transportbander (51, 52) aufweist, die einen dazwischen befindlichen Strangabschnitt drehfest fördern.

12. Vorrichtung nach wenigstens einem der Ansprüche 1 bis 12, **dadurch gekennzeichnet, dass** der Extrudierkopf (2), die Verfestigungseinrichtung (3), die Abdreheinrichtung (4) und die Fördereinrichtung (5) fluchtend angeordnet sind.

13. Vorrichtung nach der Ansprüche 1 bis 12, **dadurch gekennzeichnet, dass** die Verfestigungseinrichtung (3) eine Ringdusche (31) oder eine Wanne (32) für eine Sole-Lösung umfasst, die unmittelbar nach dem Extrudierkopf (2) angeordnet sind.

14. Vorrichtung nach wenigstens einem der Ansprüche 1 bis 13, **dadurch gekennzeichnet, dass** eine Verdrängereinheit (6) zwischen der Abdreheinrichtung (4) und der Fördereinrichtung (5) vorgesehen ist

15. Vorrichtung nach Anspruch 14, **dadurch gekennzeichnet, dass** die Verdrängereinheit (6) zwei gegenläufig und synchron arbeitende Verdränger (61, 62) umfasst, die im geschlossenen Zustand einen Spalt (63) ausbilden.

16. Verfahren zum Herstellen eines Stranges aus einer pastösen Masse, insbesondere Wurstbrät, mit den Schritten
- Koextrudieren der pastösen Masse und einer die Masse umgebenden Hülle mit einem Koextrusionsmittel,
- Verfestigen der Hülle und
- Führen eines Strangabschnittes mittels einer Abdreheinrichtung (4) und einer Fördereinrichtung (5), wobei entweder die Koextrusionsmittel (27) und eine Strangführung (41) der Abdreheinrichtung (4) drehbar sind und die Fördereinrichtung (5) angepasst ist, den Strang (1) drehfest zu fördern, oder
die Strangführung (41) und die Koextrusionsmittel (27) stationär sind und die Fördereinrichtung (5) den Wurststrang dreht.

17. Verfahren nach Anspruch 16, **dadurch gekennzeichnet, dass** mittels einerzwischen der Abdreheinrichtung (4) und der Fördereinrichtung (5) vorgesehenen Verdrängereinheit (6) die pastöse Masse gegenüber der Hülle zur Bildung einer Lücke verdrängt wird.

## Claims

1. A device for the manufacture of a strand (1) of a pasty mass, in particular sausage meat, with an extrusion head (2), comprising means (27) for coextruding the pasty mass and a casing surrounding the pasty mass, a solidification means (3) for solidifying the casing, and a wring-off means (4),
**characterized by**
a conveyor means (5), which is arranged downstream of the wring-off means (4), wherein either the coextrusion means (27) and a strand guide (41) of the wring-off means (4) are rotatable and the conveyor means (5) is adapted to convey the strand (1) non-rotationally, or the strand guide (41) and the coextrusion means (27) are stationary and the conveyor means (5) rotates the sausage strand.

2. The device according to claim 1, **characterized in that** the coextrusion means (27) comprise a filling tube (21) and an extrusion nozzle (22) assigned to the filling tube (21), the filling tube (21) and the extrusion nozzle (22) being rotatable about a longitudinal axis (A) of the filling tube (21).

3. The device according to claim 2, **characterized in that** the extrusion nozzle (22) comprises an angular gap (23) which is formed between the filling tube (21) and a wall (24) of the extrusion nozzle (22) at the free end of the filling tube (21).

4. The device according to claim 3, **characterized in that** the annular gap (23) essentially extends radially to the longitudinal axis (A) of the filling tube (21), the wall (24) essentially ending with the free end of the filling tube (21).

5. The device according to claim 3, **characterized in that** the annular gap (23) essentially extends in parallel with the longitudinal axis (A) of the filling tube (21), the wall (24) overgripping the free end of the filling tube (21).

6. The device according to claim 5, **characterized in that** for adjusting the annular gap (23), the wall (24) is mounted in the extrusion head (2) to be axially shiftable.

7. The device at least according to one of claims 5 to 6, **characterized in that** the wall (24) defines a nozzle hollow space (25) surrounding the filling tube (21), said space being connected to a mass supply (26).

8. The device at least according to one of claims 2 to 7, **characterized in that** the extrusion nozzle (22) is fixedly connected with the filling tube (21) and is rotatably mounted.

9. The device according to claim 1, **characterized in that** the strand guide (41) comprises a sleeve (43) rotatably mounted in a housing (42), said sleeve being connected to a drive wheel (44).

10. The device at least according to one of claims 1 to 9, **characterized in that** the wring-off means (4) and the coextrusion means (27) are synchronously driven.

11. The device at least according to one of claims 1 to 10, **characterized in that** the conveyor means (5) comprises at least two parallel conveying belts (51, 52) the calibers of which can be adjusted and which non-rotationally transport a strand section located therebetween.

12. The device at least according to one of claims 1 to 11, **characterized in that** the extrusion head (2), the solidification means (3), the wring-off means (4) and the coextrusion means (5) are aligned.

13. The device at least according to one of claims 1 to 12, **characterized in that** the solidification means (3) comprises an annular shower (31) or a tub (32) for brine which are arranged directly downstream of the extrusion head (2).

14. The device at least according to one of claims 1 to 13, **characterized in that** a displacement unit (6) is provided between the wring-off means (4) and the conveyor means (5).

15. The device according to claim 14, **characterized in that** the displacement unit (6) comprises two displacers (61, 62) operating in opposite directions and synchronously (61, 62) which, in a closed condition, form a gap (63).

16. A method for manufacturing a strand of a pasty mass, in particular sausage meat, comprising the steps of
- coextruding the pasty mass and a casing surrounding the mass, with a coextrusion means,
- solidifying the casing, and
- guiding a strand section by means of a wring-off means (4) and a conveyor means (5), wherein either the coextrusion means (27) and a strand guide (41) of the wring-off means (4) are rotatable and the conveyor means (5) is adapted to convey the strand (1) non-rotationally, or
the strand guide (4) and the coextrusion means (27) are stationary and the conveyor means (5) rotates the sausage strand.

17. The method according to claim 16, **characterized in that** by means of a displacement unit (6) disposed between the wring-off means (4) and the conveyor means (5), the pasty mass is displaced with respect to the casing for forming a gap.

## Revendications

1. Dispositif de fabrication d'un toron (1) en une masse pâteuse, en particulier en chair à saucisse, présentant une tête d'extrusion (2) qui comprend des moyens (27) pour coextruder la masse pâteuse et une enveloppe entourant la masse, un dispositif de durcissage (3) pour durcir l'enveloppe et un dispositif de torsion (4), **caractérisé par**
un dispositif de convoyage (5) qui est monté en aval du dispositif de torsionnage (4), en sorte que les moyens d'extrusion (27) et un guidage de toron (41) du dispositif de torsion (4) sont rotatifs
et le dispositif de convoyage (5) est adapté pour convoyer le toron (1) sans rotation, soit le guidage de toron (41) et les moyens d'extrusion (27) sont stationnaires et le dispositif de convoyage (5) fait tourner le toron.

2. Dispositif selon la revendication 1, **caractérisé en ce que** les moyens de coextrusion (27) comprennent un tube de remplissage (21) et une filière d'extrusion (22) associée au tube de remplissage (21), le tube de remplissage (21) et la filière d'extrusion (22) étant capables de tourner autour d'un axe longitudinal (A) du tube de remplissage (21).

3. Dispositif selon la revendication 2, **caractérisé en ce que** la filière d'extrusion (22) présente une fente annulaire (23) qui est réalisée entre le tube de remplissage (21) et une paroi (24) de la filière d'extrusion (22), à l'extrémité libre du tube de remplissage (21).

4. Dispositif selon la revendication 3, **caractérisé en ce que** la fente annulaire (23) s'étend de manière essentiellement radiale par rapport à l'axe longitudinal (A) du tube de remplissage (21), la paroi (24) se terminant essentiellement à l'extrémité libre du tube de remplissage (21).

5. Dispositif selon la revendication 3, **caractérisé en ce que** la fente annulaire (23) s'étend de manière essentiellement parallèle à l'axe longitudinal (A) du tube de remplissage (21), la paroi (24) dépassant l'extrémité libre du tube de remplissage (21).

6. Dispositif selon la revendication 5, **caractérisé en ce que** pour régler la fente annulaire (23), la paroi (24) est logée pour coulisser axialement dans la tête d'extrusion (2).

7. Dispositif selon l'une au moins des revendications 5 à 6, **caractérisé en ce que** la paroi (24) délimite un espace creux de filière (25), entourant le tube de remplissage (21), qui est relié à une arrivé de masse (26).

8. Dispositif selon l'une au moins des revendications 2 à 7, **caractérisé en ce que** la filière d'extrusion (22) est reliée fermement au tube de remplissage (21) et est logée de manière à pouvoir tourner.

9. Dispositif selon la revendication 1, **caractérisé en ce que** le guide de toron (41) comprend une douille (43), logée de manière à tourner dans un carter (42), qui est reliée à une roue d'entraînement (44).

10. Dispositif selon l'une au moins des revendications 1 à 9, **caractérisé en ce que** le dispositif de rotation (4) et les moyens de coextrusion (27) sont entraînés de manière synchrone.

11. Dispositif selon l'une au moins des revendications 1 à 10, **caractérisé en ce que** le dispositif de convoyage (5) présente au moins deux bandes transporteuses (51, 51) parallèles, réglables en calibre, qui convoient sans rotation une section de toron située entre elles.

12. Dispositif selon l'une au moins des revendications 1 à 12, **caractérisé en ce que** la tête d'extrusion (2), le dispositif de durcissage (3), le dispositif de torsion (4) et le dispositif de convoyage (5) sont disposées en alignement les uns avec les autres.

13. Dispositif selon les revendications 1 à 12, **caractérisé en ce que** le dispositif de durcissage (3) comprend une douche annulaire (31) ou une cuve (32) pour une saumure qui sont montées directement en aval de la tête d'extrusion (2).

14. Dispositif selon l'une au moins des revendications 1 à 13, **caractérisé en ce qu'**une unité à repousser (6) est prévue entre le dispositif de torsion (4) et le dispositif de convoyage (5).

15. Dispositif selon la revendication 14, **caractérisé en ce que** l'unité à repousser (6) comprend deux poussoirs (61, 62) travaillant en sens opposé, de manière synchronisée, qui à l'état fermé forment une fente (63).

16. Procédé de fabrication d'un toron de masse pâteuse, en particulier de chair à saucisse, comportant les étapes qui consistent à :
- coextruder la masse pâteuse et une enveloppe entourant la masse avec un moyen de coextrusion,
- durcir l'enveloppe et
- guider une section de toron au moyen d'un dispositif de torsion (4) et d'un dispositif de convoyage (5), en sorte que soit les moyens d'extrusion (27) et un guidage de toron (41) du dispositif de torsion (4) sont rotatifs et le dispositif de convoyage (5) est adapté pour convoyer le toron (1) sans rotation,
soit le guidage de toron (41) et les moyens d'extrusion (27) sont stationnaires et le dispositif de convoyage (5) fait tourner le toron de saucisse.

17. Procédé selon la revendication 16, **caractérisé en ce qu'**au moyen d'une unité à repousser (6), prévue entre le dispositif de torsion (4) et le dispositif de convoyage (5), de la masse pâteuse est repoussée par rapport à l'enveloppe pour former un vide.
